(19) Europäisches Patentamt
European Patent Office
Office européen des brevets

(11) **EP 4 477 773 A1**

(12) **EUROPEAN PATENT APPLICATION**
published in accordance with Art. 153(4) EPC

(43) Date of publication:
**18.12.2024 Bulletin 2024/51**

(21) Application number: **22935635.7**

(22) Date of filing: **31.10.2022**

(51) International Patent Classification (IPC):
*C22C 38/00* (2006.01)   *C21D 9/46* (2006.01)
*C22C 38/06* (2006.01)   *C22C 38/60* (2006.01)

(52) Cooperative Patent Classification (CPC):
**C21D 9/46; C22C 38/00; C22C 38/06; C22C 38/60**

(86) International application number:
**PCT/JP2022/040833**

(87) International publication number:
**WO 2023/188504 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022057719**

(71) Applicant: JFE Steel Corporation
Tokyo 100-0011 (JP)

(72) Inventors:
• YOSHIOKA, Shimpei
Tokyo 100-0011 (JP)
• KIMURA, Hideyuki
Tokyo 100-0011 (JP)
• HONDA, Yuma
Tokyo 100-0011 (JP)

(74) Representative: Haseltine Lake Kempner LLP
One Portwall Square
Portwall Lane
Bristol BS1 6BH (GB)

(54) **STEEL SHEET, MEMBER, METHOD FOR PRODUCING SAID STEEL SHEET AND METHOD FOR PRODUCING SAID MEMBER**

(57)   Provided is a steel sheet that simultaneously achieves a strength of TS: 1310 MPa or more and excellent delayed fracture resistance. The steel sheet has a defined chemical composition and a complex structure consisting mainly of martensite and bainite, where carbides in the grains of martensite and bainite are 5 % or more and 25 % or less, the average circle equivalent diameter of carbides is 10 nm or more and 80 nm or less, and the particle size distribution of carbides satisfies Expression (1).

**Description**

TECHNICAL FIELD

The present disclosure relates to a steel sheet, a member, and methods of producing same.

BACKGROUND

In recent years, the application of high strength steel sheets to automotive body frame components has been increasing due to further need for weight reduction of automotive bodies.

As an example of such a high strength steel sheet, Patent Literature (PTL) 1 describes:

"a high strength cold-rolled steel sheet comprising a chemical composition containing, in mass%, C: more than 0.140 % and less than 0.400 %, Si: more than 0.35 % and less than 1.50 %, Mn: more than 1.50 % and less than 4.00 %, P: 0.100 % or less, S: 0.010 % or less, Al: 0.100 % or less, N: 0.0100 % or less, Ti: 0 % or more and less than 0.050 %, Nb: 0 % or more and less than 0.050 %, V: 0 % or more and 0.50 % or less, Cr: 0 % or more and 1.00 % or less, Mo: 0 % or more and 0.50 or less, B: 0 % or more and 0.0100 % or less, Ca: 0 or more and 0.0100 % or less, Mg: 0 % or more and 0.0100 % or less, REM: 0 % or more and 0.0500 % or less, and Bi: 0 % or more and 0.050 % or less, with the balance being Fe and inevitable impurity, wherein

microstructure at 1/4 of the thickness from the surface contains, in volume fraction, 70.0 % or more of tempered martensite, more than 3.0 % and less than 10.0 % of retained austenite, a total of 25.0 % or less of ferrite and bainite, and 5.0 % or less of martensite,

microstructure at 25 $\mu$m from the surface contains, in volume fraction, a total of 70 % or more of ferrite and bainite, and a total of 30 % or less of martensite and tempered martensite,

at 25 $\mu$m from the surface, average particle size of martensite and tempered martensite is 5.0 $\mu$m or less, and tensile strength is 1310 MPa or more, uniform elongation is 5.0 % or more, and R/t, the ratio of limit bending radius R to thickness t in 90° V-bending, is 5.0 or less."

PTL 2 describes:

"a high strength steel sheet having excellent delayed fracture resistance and comprising a chemical composition containing

C: 0.08 % to 0.20 % (meaning mass%, the same applies for chemical composition hereinafter),

Si: 0.20 % to 3.0 %,

Mn: 1.0 % to 3.5 %,

Al: 3 % or less (not including 0 %),

P: 0.15 % or less (not including 0 %),

S: 0.02 % or less (not including 0 %), and

N: 0.01 % or less (not including 0 %),

with the balance being iron and inevitable impurity, wherein

tempered martensite and carbide total 95 area% or more of total microstructure,

in microstructure from a 10 $\mu$m depth position in the thickness direction from the steel sheet surface to a 1/4 thickness depth position, prior austenite grain size (Dy) is 20 $\mu$m or less, and area fraction (Q value) of carbide is 0.20 % or less (but not including Q value = 0 %), and

tensile strength is 1180 MPa or more and 1370 MPa or less."

CITATION LIST

Patent Literature

PTL 1: JP 6635236 B1
PTL 2: JP 5906154 B2

SUMMARY

(Technical Problem)

Conventionally, when applying high strength steel sheets to automotive body frame components, application of high strength steel sheets by hot press forming, in which steel sheets are heated and pressed, has been vigorously studied. Recently, however, the application of high strength steel sheets by cold press forming (hereinafter also referred to as cold pressing) is being considered once again from the viewpoints of cost and productivity.

When high strength steel sheets, in particular steel sheets having a tensile strength (hereinafter also referred to as TS) of 1310 MPa or more, are cold pressed, delayed fracture becomes apparent due to increased residual stress in the component and deterioration of delayed fracture resistance of the material itself. Here, delayed fracture is a phenomenon that leads to failure as follows. When a component is placed in a hydrogen entry environment with high stress applied to the component, hydrogen enters the component. This causes a decrease in interatomic bonding strength and causes local deformation, which result in microcracks, which propagate and lead to fracture.

Delayed fracture resistance of steel sheets is known to typically deteriorate with increasing addition of alloying elements. Therefore, it is considered effective to use martensite or bainite as the main phase and a design concept that minimizes the addition of alloying elements that contribute to strength. However, even when martensite or bainite is used as the main phase, the deterioration of delayed fracture resistance associated with increased strength has become a practical issue, and technology to further improve delayed fracture resistance is required.

For example, in the high strength steel sheet described in PTL 1, ferrite and bainite are formed in the surface layer. As a result, C is enriched in untransformed austenite surrounding the ferrite and bainite, and martensite formed from the untransformed austenite is very hard. As a result, these become stress concentrated areas and contribute to delayed fracture.

In the high strength steel sheet described in PTL 2, an area fraction of carbides in martensite is equal to or less than a certain amount, and therefore an amount of solute C in prior austenite ($\gamma$) grains is high and strength in prior $\gamma$ grains is high. Here, delayed fracture usually occurs with prior $\gamma$ grain boundaries as initiation points. Therefore, when strength in prior $\gamma$ grains is high, strength of prior $\gamma$ grain boundaries is relatively low, which contributes to delayed fracture due to intergranular fracture.

The present disclosure was developed in view of the above requirements, and it would be helpful to provide a steel sheet that simultaneously achieves a strength of TS: 1310 MPa or more and excellent delayed fracture resistance, together with an advantageous method of producing same.

Further, it would be helpful to provide a member using the steel sheet as a material and a method of producing same.

(Solution to Problem)

The inventors engaged in extensive studies and made the following discoveries.

(i) Strength in martensite and bainite grains is proportional to the amount of solute C, and the amount of solute C correlates with the amount of carbide precipitation. Therefore, controlling the amount and size of carbide precipitation is important in order to obtain a strength of TS: 1310 MPa or more while suppressing delayed fracture at grain boundaries.
(ii) Fine carbides inhibit hydrogen diffusion that causes delayed fractures, and have an effect of improving delayed fracture resistance. However, when all carbides are precipitated finely, the amount of carbides precipitated becomes insufficient to be effective in suppressing delayed fracture at grain boundaries. To achieve both goals, it is effective to appropriately control particle size distribution of carbides in addition to area fraction and size of the carbides.
(iii) To control the particle size distribution of carbides, it is important to control production conditions, in particular a tempering process that is divided into two sections, and in each section tempering parameters, calculated from residence time and intermediate temperature, are separately and appropriately controlled.

The present disclosure is based on these discoveries and further studies.
Primary features of the present disclosure are as follows.

1. A steel sheet comprising a chemical composition containing (consisting of), in mass%,

C: 0.12 % or more and 0.40 % or less,
Si: 1.50 % or less,
Mn: 0.20 % or more and 3.50 % or less,

P: 0.050 % or less,
S: 0.0100 % or less,
sol.Al: 1.00 % or less, and
N: 0.010 % or less,
with the balance being Fe and inevitable impurity, wherein
total area fraction of martensite and bainite is 95 % or more and 100 % or less,
area fraction of carbides in grains of the martensite and the bainite is 5 % or more and 25 % or less,
average circle equivalent diameter of the carbides is 10 nm or more and 80 nm or less,
Expression (1), below, is satisfied for particle size distribution of the carbides, and
the steel sheet has a tensile strength of 1310 MPa or more,
[Math. 1]

$$\frac{n}{(n-1)(n-2)}\sum_{i=1}^{n}\left(\frac{x_i - \mathrm{X}}{s}\right)^3 \geqq 1.20 \qquad \ldots (1)$$

where

$x_i$ is number density per $\mu m^2$ of carbides having circle equivalent diameter of $(5.0 \times i)$ nm or more and less than $(5.0 \times (i + 1))$ nm,
i is an integer from 1 to n,
n is 31,
X is an average value of $x_i$, and
s is standard deviation of $x_i$.

2. The steel sheet according to 1, above, wherein the chemical composition further contains at least one element selected from Group A, Group B, or Group A and Group B, in mass%,

Group A consists of

Cu: 1.00 % or less,
Ni: 1.00 % or less,
Mo: 0.50 % or less,
Cr: 1.00 % or less,
Zr: 0.100 % or less,
Ca: 0.0100 % or less,
Ti: 0.100 % or less,
Nb: 0.100 % or less,
B: 0.0100 % or less,
V: 0.200 % or less,
W: 0.200 % or less,
Sb: 0.100 % or less,
Sn: 0.100 % or less, and
Mg: 0.0100 % or less, and

Group B consists of Se, As, Pb, Bi, Zn, Cs, Rb, Co, La, Tl, Nd, Y, In, Be, Hf, Tc, Ta, O, La, Ce, and Pr, totaling 0.02 % or less.

3. The steel sheet according to 1 or 2, above, further comprising a coated or plated layer on a surface.
4. A member formed using the steel sheet according to any one of 1 to 3, above.
5. A method of producing a steel sheet, the method comprising: a rolling process of rolling a steel slab having the chemical composition according to 1 or 2, above, to obtain a steel sheet;

an annealing process of annealing the steel sheet at an annealing temperature of $A_3$ or more for an annealing time of 30 s or more;
a first cooling process of cooling the steel sheet at an average cooling rate of 10 °C/s or less in a temperature range from the annealing temperature to a second cooling start temperature;
a second cooling process of cooling the steel sheet at an average cooling rate of 30 °C/s or more in a temperature range from the second cooling start temperature of 680 °C or more to 50 °C, to a cooling stop temperature of 50 °C or less; and
a tempering process of tempering the steel sheet under a set of conditions satisfying Expressions (2), (3), and (4),

$$\lambda1 \leq 5000 \qquad \ldots (2)$$

$$\lambda2 \geq 3100 \qquad \ldots (3)$$

$$\lambda2 \leq 0.88 \times \lambda1 + 400 \qquad \ldots (4)$$

where

$\lambda1$ is a tempering parameter of a first section of the tempering process,
$\lambda2$ is a tempering parameter of a second section of the tempering process,
defined by the following Expressions (5) and (6),

$$\lambda1 = T1 \times (\log t1 + 20) \qquad \ldots (5)$$

$$\lambda2 = T2 \times (\log t2 + 20) \qquad \ldots (6)$$

and
$t1$ is time in s of the first section of the tempering process,
$T1$ is intermediate temperature in °C of the first section of the tempering process,
$t2$ is time in s of the second section of the tempering process,
$T2$ is intermediate temperature in °C of the second section of the tempering process, and
the first section and the second section of the tempering process are defined as time periods in the tempering process in a temperature range of 100 °C or more divided into two equal sections, the first half being the first section and the second half being the second section.

6. The method of producing a steel sheet according to 5, above, further comprising a coating or plating treatment process of subjecting the steel sheet to a coating or plating treatment after the tempering process.
7. A method of producing a member, wherein the steel sheet according to any one of 1 to 3, above, is subjected to at least one of a forming process or a joining process to produce the member.

(Advantageous Effect)

According to the present disclosure, a steel sheet that simultaneously achieves a strength of TS: 1310 MPa or more and excellent delayed fracture resistance is obtainable. Further, due to the above properties, the steel sheet is applicable by cold pressing to various components for which high strength is required, thereby contributing to increased component strength and weight reduction more advantageously in terms of cost and productivity. In particular, the steel sheet is suitable as a steel sheet for cold pressing, applied to automobiles, home appliances, and the like via cold pressing.

DETAILED DESCRIPTION

The following describes embodiments of the present disclosure.

[1] Steel sheet

First, the chemical composition of a steel sheet according to an embodiment of the present disclosure is described. Hereinafter, although the unit in all chemical compositions is "mass%", this may be indicated simply as "%", unless otherwise specified.

C: 0.12 % or more and 0.40 % or less

C is included from the viewpoint of increasing strength of martensite and bainite and securing a strength of TS: 1310 MPa or more. When C content is less than 0.12 %, stably obtaining the defined strength is difficult. The C content is therefore 0.12 % or more. From the viewpoint of obtaining TS: 1470 MPa or more, the C content is preferably 0.18 % or more. From the viewpoint of obtaining TS: 1700 MPa or more, the C content is more preferably 0.24 % or more. However, when the C content exceeds 0.40 %, strength becomes too high and securing excellent delayed fracture resistance becomes difficult. The C content is therefore 0.40 % or less. The C content is preferably 0.36 % or less. The C content is more preferably 0.32 % or less.

Si: 1.50 % or less

Si can be added as a strengthening element by solid solution strengthening. A lower limit of Si content is not particularly limited, and may be 0 %. However, from the viewpoint of obtaining the above effect, the Si content is preferably 0.02 % or more. The Si content is more preferably 0.10 % or more. However, when the Si content exceeds 1.50 %, the effect is saturated. Further, the amount of Si segregation increases, degrading delayed fracture resistance. The Si content is therefore 1.50 % or less. The Si content is preferably 1.20 % or less. The Si content is more preferably 1.00 % or less. The Si content is even more preferably 0.80 % or less.

Mn: 0.20 % or more and 3.50 % or less

Mn is an element that improves hardenability of steel and is included to secure martensitic microstructure. Here, from the viewpoint of securing martensite in an industrially stable manner, Mn content is 0.20 % or more. The Mn content is preferably 0.80 % or more. However, excessive Mn content may degrade delayed fracture resistance through the formation of coarse MnS and Mn segregation. The Mn content is therefore 3.50 % or less. The Mn content is preferably 3.00 % or less. The Mn content is more preferably 2.50 % or less. The Mn content is even more preferably 2.00 % or less.

P: 0.050 % or less

P is an element that strengthens steel, but high content degrades spot weldability. P content is therefore 0.050 % or less. In view of the above, the P content is preferably 0.020 % or less. A lower limit of the P content is not particularly limited. However, decreasing the P content to less than 0.002 % requires significant cost. Therefore, from a cost perspective, the P content is preferably 0.002 % or more.

S: 0.0100 % or less

S degrades delayed fracture resistance through the formation of coarse MnS. S content is therefore 0.0100 % or less. In view of the above, the S content is preferably 0.0050 % or less. The S content is more preferably 0.0020 % or less. A lower limit of the S content is not particularly limited. However, decreasing the S content to less than 0.0002 % requires significant cost. Therefore, from a cost perspective, the S content is preferably 0.0002 % or more.

sol.Al: 1.00 % or less

Al can be included to provide sufficient deoxidation and to decrease inclusions in steel. A lower limit of sol.Al content is not particularly limited and may be 0 %. However, from the viewpoint of stable deoxidation, the sol.Al content is preferably 0.005 % or more. The sol.Al content is more preferably 0.01 % or more. However, when the sol.Al content exceeds 1.00 %, a large amount of Al coarse inclusions are formed and delayed fracture resistance deteriorates. The sol.Al content is therefore 1.00 % or less. The sol.Al content is preferably 0.80 % or less. The sol.Al content is more preferably 0.50 % or less.

N: 0.010 % or less

N forms coarse nitrides and degrades delayed fracture resistance. N content is therefore 0.010 % or less. The N content is preferably 0.0080 % or less. A lower limit of the N content is not particularly limited, and may be 0 %. However, from the viewpoint of industrial implementation, the N content is preferably 0.0005 % or more.

Basic composition of the steel sheet according to an embodiment of the present disclosure is described above. The steel sheet according to an embodiment of the present disclosure has a chemical composition including the basic composition above, with the balance being Fe (iron) and inevitable impurity. Here, the steel sheet according to an embodiment of the present disclosure preferably has a chemical composition consisting of the basic composition above, with the balance being Fe and inevitable impurity. In addition to the above basic composition, the steel sheet according to an embodiment of the present disclosure may contain one or more elements selected from the following optionally added components. The effects of the present disclosure are obtainable whenever the content of the following optionally added components is equal to or less than the upper limits indicated below, and therefore there is no particular need to set a lower limit. Further, when any of the optionally added components listed below are contained at less than a preferred lower limit described below, the component is included as inevitable impurity.

Cu: 1.00 % or less,
Ni: 1.00 % or less,
Mo: 0.50 % or less,
Cr: 1.00 % or less,
Zr: 0.100 % or less,
Ca: 0.0100 % or less,
Ti: 0.100 % or less,
Nb: 0.100 % or less,
B: 0.0100 % or less,
V: 0.200 % or less,
W: 0.200 % or less,
Sb: 0.100 % or less,
Sn: 0.100 % or less, and
Mg: 0.0100 % or less.

Cu: 1.00 % or less

Cu is an element that improves corrosion resistance. Further, Cu has an effect of coating the steel sheet surface with corrosion products to suppress hydrogen entry to the steel sheet and improve delayed fracture resistance. In view of the above, Cu content is preferably more than 0 %. The Cu content is more preferably 0.01 % or more. In particular, from the viewpoint of improving delayed fracture resistance, the Cu content is even more preferably 0.05 % or more. However, the Cu content being too high may cause surface defects. Therefore, when Cu is included, the Cu content is preferably 1.00 % or less.

Ni: 1.00 % or less

Ni is another element that improves corrosion resistance. In view of the above, Ni content is preferably more than 0 %. The Ni content is more preferably 0.01 % or more. However, when the Ni content is too high, scale formation in the heating furnace becomes uneven, causing surface defects. Further, costs are increased. Therefore, when Ni is included, the Ni content is preferably 1.00 % or less.

Mo: 0.50 % or less

Mo can be included for the purpose of obtaining the effects of improving hardenability of steel and stably securing the defined strength. From the viewpoint of obtaining the above effects, Mo content is preferably more than 0 %. The Mo content is more preferably 0.001 % or more. The Mo content is even more preferably 0.005 % or more. However, the Mo content exceeding 0.50 % leads to degradation of chemical convertibility. Therefore, when Mo is included, the Mo content is preferably 0.50 % or less.

Cr: 1.00 % or less

Cr can be included for the purpose of obtaining the effect of improving hardenability of steel. From the viewpoint of obtaining the above effect, Cr content is preferably more than 0 %. The Cr content is more preferably 0.001 % or more. However, the Cr content exceeding 1.00 % leads to degradation of chemical convertibility. Therefore, when Cr is included, the Cr content is preferably 1.00 % or less. From the viewpoint of preventing degradation of chemical convertibility, the Cr content is more preferably 0.20 % or less.

Zr: 0.100 % or less

Zr contributes to higher strength through the refinement of prior $\gamma$ grain size and ensuing refinement of the internal structure of martensite. In view of the above, Zr content is preferably more than 0 %. The Zr content is more preferably 0.001 % or more. However, excessive Zr content increases coarse Zr precipitates, leading to degradation of delayed fracture resistance. Therefore, when Zr is included, the Zr content is preferably 0.100 % or less.

Ca: 0.0100 % or less

Ca has the effects of fixing S as CaS and improving delayed fracture resistance. From the viewpoint of obtaining such effects, Ca content is preferably more than 0 %. The Ca content is more preferably 0.0001 % or more. However, excessive Ca content degrades surface quality. Therefore, when Ca is included, the Ca content is preferably 0.0100 % or less. The Ca content is more preferably 0.0050 % or less.

Ti: 0.100 % or less

Ti forms TiN prior to the formation of BN. This secures solute B and has the effect of stabilizing hardenability. From the viewpoint of achieving such an effect, the Ti content is preferably more than 0 %. The Ti content is more preferably 0.002 % or more. However, excessive Ti content causes the formation of large amounts of inclusions such as coarse TiN and TiC, which degrade delayed fracture resistance. The Ti content is therefore 0.100 % or less. The Ti content is preferably 0.060 % or less. The Ti content is more preferably 0.055 % or less.

Nb: 0.100 % or less

Nb contributes to higher strength through the refinement of prior $\gamma$ grain size and ensuing refinement of the internal structure of martensite. In view of the above, Nb content is preferably more than 0 %. The Nb content is more preferably 0.002 % or more. However, excessive Nb content increases coarse Nb precipitates, leading to degradation of delayed fracture resistance. Therefore, when Nb is included, the Nb content is preferably 0.100 % or less.

B: 0.0100 % or less

B is an element that improves hardenability of steel and has the advantage of increasing martensite formation even at low Mn content. From the viewpoint of obtaining these effects, the B content is preferably more than 0 %. The B content is more preferably 0.0002 % or more. The B content is even more preferably 0.0005 % or more. However, when the B content exceeds 0.0100 %, the effects are saturated. The B content is therefore 0.0100 % or less.

V: 0.200 % or less

V can be included for the purpose of obtaining the effects of improving hardenability of steel and increasing strength through refinement of martensite. From the viewpoint of obtaining these effects, V content is preferably more than 0 %. The V content is more preferably 0.001 % or more. However, when the V content exceeds 0.200 %, castability degrades. Therefore, when V is included, the V content is preferably 0.200 % or less.

W: 0.200 % or less

W contributes to higher strength through the formation of fine W carbides and W carbonitrides. In view of the above, W content is preferably more than 0 %. The W content is more preferably 0.001 % or more. However, excessive W content increases coarse precipitates remaining in a non-solid solution state during slab heating in a hot rolling process, leading to degradation of delayed fracture resistance. Therefore, when W is included, the W content is preferably 0.200 % or less.

Sb: 0.100 % or less

Sb inhibits oxidation and nitridation of the surface layer of the steel sheet, thereby suppressing a decrease in C and B. The suppression of a decrease in C and B inhibits ferrite formation in the surface layer of the steel sheet and contributes to higher strength. In view of the above, Sb content is preferably more than 0 %. The Sb content is more preferably 0.001 % or more. However, when the Sb content exceeds 0.100 %, castability degrades. Further, Sb segregates at prior $\gamma$ grain boundaries, leading to degradation of delayed fracture resistance. Therefore, when Sb is included, the Sb content is preferably 0.100 % or less.

Sn: 0.100 % or less

Sn inhibits oxidation and nitridation of the surface layer of the steel sheet, thereby suppressing a decrease in C and B. The suppression of a decrease in C and B inhibits ferrite formation in the surface layer of the steel sheet, contributes to higher strength, and improves delayed fracture resistance. In view of the above, Sn content is preferably more than 0 %. The Sn content is more preferably 0.001 % or more. However, when the Sn content exceeds 0.100 %, castability degrades. Further, Sn segregates at prior γ grain boundaries, leading to degradation of delayed fracture resistance. Therefore, when Sn is included, the Sn content is preferably 0.100 % or less.

Mg: 0.0100 % or less

Mg fixes O as MgO and improves delayed fracture resistance. In view of the above, Mg content is preferably more than 0 %. The Mg content is more preferably 0.0001 % or more. However, excessive Mg content leads to degradation of surface quality and delayed fracture resistance. Therefore, when Mg is included, the Mg content is preferably 0.0100 % or less.

Elements other than the above include, for example, Se, As, Pb, Bi, Zn, Cs, Rb, Co, La, Tl, Nd, Y, In, Be, Hf, Tc, Ta, O, La, Ce, Pr, and the like. The total content of one or more elements selected from this list is acceptable when 0.02 % or less. Of course, the content of any of these elements may be 0 %.

Elements other than those described above are Fe and inevitable impurity.

The following describes the microstructure of the steel sheet according to an embodiment of the present disclosure.

The microstructure of the steel sheet according to an embodiment of the present disclosure:

total area fraction of martensite and bainite is 95 % or more and 100 % or less,
area fraction of carbides in grains of the martensite and the bainite is 5 % or more and 25 % or less,
average circle equivalent diameter of the carbides is 10 nm or more and 80 nm or less,
and Expression (1) is satisfied for particle size distribution of the carbides.

The reasons for each of these limitations are described below. Note that area fraction is the area fraction relative to the entire microstructure.

Total area fraction of martensite and bainite: 95 % or more and 100 % or less

To obtain the defined strength, the total area fraction of martensite and bainite is 95 % or more. When the total area fraction of martensite and bainite is less than 95 %, residual microstructure ferrite, retained austenite and pearlite increase, making obtaining the defined strength difficult. Methods to secure the defined strength in a microstructure with a total area fraction of martensite and bainite of less than 95 % include, for example, lowering the tempering temperature or increasing the C content. However, in the case of lowering tempering temperature, toughness is reduced and delayed fracture resistance deteriorates. Further, the method of increasing the C content may degrade weldability. The total area fraction of martensite and bainite is therefore 95 % or more. An upper limit of the total area fraction of martensite and bainite is not particularly limited and may be 100 %.

Area fraction of residual microstructure: 5 % or less

Residual microstructure other than martensite and bainite may reduce strength or contribute to delayed fracture. The area fraction of the residual microstructure is therefore 5 % or less. A lower limit of the area fraction of the residual microstructure is not particularly limited, and the area fraction may be 0 %. Residual microstructure other than martensite and bainite may include ferrite, retained austenite, and pearlite.

Here, the total area fraction of martensite and bainite is measured as follows.

An L-section of the steel sheet (vertical section parallel to the rolling direction) is polished, corroded with nital, then observed by scanning electron microscopy (SEM) at a 1/4 sheet thickness position of the steel sheet with 4 fields of view at 2000× magnification. Image interpretation is performed on the micrographs captured. Both martensite and bainite are regions of gray contrast. Martensite and bainite may contain internal inclusions such as carbides, nitrides, sulfides, and oxides, but regions occupied by such inclusions are included in the martensite and bainite area. Further, the gray contrast region may contain retained austenite, and therefore the total area fraction of martensite and bainite is calculated by subtracting the area fraction of retained austenite from the area fraction of the gray contrast region by the method described below.

The martensite and bainite are composed mainly of so-called tempered martensite and tempered bainite that have been tempered during the production process. Here, tempered martensite and tempered bainite include martensite and bainite that have self-tempered during continuous cooling. Further, some martensite may contain so-called fresh martensite that has not undergone tempering, with an area fraction of 5 % or less (in each of the Examples described below, the area fraction of fresh martensite (with no internal carbides observed) was 5 % or less). Tempered martensite typically contains internal white contrast carbide. On the other hand, no internal carbides are observed in fresh martensite.

Of the residual microstructure, ferrite is region of black contrast. Pearlite is a layered microstructure of ferrite and plate-like, white contrast cementite.

Martensite and bainite can basically be distinguished based on the contrast difference in the SEM micrograph described above. However, when distinguishing between the two is difficult, it is possible to do so by observing the position and variants of carbides contained inside by SEM at 10,000 × magnification. That is, in bainite, carbides are formed at the interface of the lath-shape microstructure or within laths. Further, the crystal orientation relationship between bainitic ferrite and cementite is one type, and therefore the carbides formed extend in a single direction. On the other hand, in tempered martensite mainly composed of martensite, carbides are formed in laths. Further, there are two or more types of crystal orientation relationships between laths and carbides, and therefore the carbides formed extend in multiple directions. Accordingly, distinguishing tempered martensite from bainite by observing the position and variants of carbides contained inside is possible by SEM at 10,000× magnification.

The total area of the gray contrast region for the four fields of view is calculated, divided by the total area of the observation area for the four fields of view, and multiplied by 100. The area fraction of retained austenite measured by a method described below is subtracted from the obtained value, and the result is the total area fraction of martensite and bainite. However, the total area fraction of martensite and bainite is calculated by excluding island regions having an area of less than 1 $\mu m^2$ from the gray contrast regions.

Here, the area fraction of retained austenite is measured as follows.

The steel sheet is chemically polished with oxalic acid from the surface to a depth of 200 $\mu m$. Then, using the chemically polished surface as an observation plane, observation is performed by X-ray diffraction. MoK$\alpha$ radiation is used for incident X-rays to determine a ratio of diffraction intensity of the (200), (220), and (311) planes of fcc iron (austenite) to diffraction intensity of the (200), (211), and (220) planes of bcc iron. The volume fraction of retained austenite is then calculated from the ratio of the diffraction intensity of each plane. Then, assuming that the retained austenite is uniform in three dimensions, the volume fraction of the retained austenite is taken as the area fraction of retained austenite.

Further, the area fraction of the residual microstructure is determined by subtracting the total area fraction of martensite and bainite, determined as above, from 100 %.

[Area fraction of residual microstructure (%)] = 100 - [total area fraction of martensite and bainite (%)]

Area fraction of carbides in grains of martensite and bainite: 5 % or more and 25 % or less

Carbides in grains of martensite and bainite (hereinafter also referred to simply as carbides) inhibit the diffusion of hydrogen, which is a cause of delayed fracture. Further, the carbides decrease intragranular strength, thereby reducing the difference between intragranular and intergranular strength and relatively strengthening grain boundaries. Through these effects, delayed fracture resistance is improved. When the area fraction of carbides is less than 5 %, the above improvement in delayed fracture resistance is insufficient. However, when the area fraction of carbides exceeds 25 %, securing the defined strength becomes difficult. The area fraction of carbides is therefore 5 % or more and 25 % or less. The area fraction of carbides is preferably 10 % or more. The area fraction of carbides is preferably 20 % or less.

Average circle equivalent diameter of carbides: 10 nm or more and 80 nm or less

When the average circle equivalent diameter of carbides is less than 10 nm, the above improvement in delayed fracture resistance is insufficient. However, when the average circle equivalent diameter of carbides exceeds 80 nm, securing the defined strength becomes difficult. Further, coarse carbides precipitate even on prior $\gamma$ grain boundaries, which may contribute to delayed fracture due to intergranular fracture. The average circle equivalent diameter of carbides is therefore 10 nm or more and 80 nm or less. The average circle equivalent diameter of carbides is preferably 60 nm or less. The average circle equivalent diameter of carbides is more preferably 40 nm or less.

Particle size distribution of carbides: Expression (1) is satisfied

Carbide grain size coarsens with increasing tempering temperature. Further, when carbides are tempered at a certain temperature, the particle size distribution of carbides is close to a normal distribution. Expression (1) represents a state where particle size distribution of carbides is not a normal distribution, but is dominated by relatively fine carbides and also contains a certain amount of coarse carbides. The inventors have made various studies and found that excellent delayed fracture resistance is obtainable by satisfying Expression (1). Although the mechanism is not clear, the inventors believe that a hydrogen trapping effect of the relatively fine carbides and a decrease in solute C content due to formation of coarse carbides are working synergistically. Expression (1) is therefore satisfied for particle size distribution of intragranular carbides. The left-hand side value of Expression (1) is preferably 1.35 or more. The left-hand side value is more preferably 1.50 or more. Further, an upper limit of the left-hand side value of Expression (1) is not particularly limited. For example, the left-hand side value of Expression (1) is preferably 2.20 or less.

[Math. 2]

$$\frac{n}{(n-1)(n-2)} \sum_{i=1}^{n} \left( \frac{x_i - X}{s} \right)^3 \geqq 1.20 \qquad \ldots(1)$$

Here,

xi is number density per $\mu m^2$ of carbides having circle equivalent diameter of $(5.0 \times i)$ nm or more and less than $(5.0 \times (i + 1))$ nm,
i is an integer from 1 to n,
n is 31,
X is average value of xi ((arithmetic) mean of x1 to x31), and
s is standard deviation of xi (standard deviation of x1 to x31).

Further, the area fraction and average circle equivalent diameter of carbides are measured and the left-hand side value of Expression (1) is calculated as follows.

An L-section (vertical section parallel to the rolling direction) of the steel sheet is corroded with nital after polishing. The L-section of the steel sheet is observed by SEM at a 1/4 sheet thickness position to obtain an in-lens SE image. The in-lens SE image is affected by the work function of the material surface and a change in surface potential due to local charging, and the image is sensitive to material differences, and therefore boundaries between steel substrate and carbides are clearly observable. Accelerating voltage: 1 kV, working distance: 4 mm, and magnification: 15,000×. The resulting in-lens SE image is subject to image interpretation by ImageJ and binarized into carbides and steel substrate. A particle analysis function then calculates the total area fraction of carbides, and the value is taken as the area fraction of carbides. Further, the circle equivalent diameter of each carbide is calculated, and an average is taken as the average circle equivalent diameter of carbides. In addition, based on the circle equivalent diameter of each carbide, the number of carbides having a circle equivalent diameter of $(5.0 \times i)$ nm or more and less than $(5.0 \times (i + 1))$ nm is counted to obtain xi (the number density of carbides with a circle equivalent diameter of $(5.0 \times i)$ nm or more and less than $(5.0 \times (i + 1))$ nm). The left-hand side value of Expression (1) is calculated from the value determined for xi.

The circle equivalent diameter of each carbide is calculated by the following expression.

[Circle equivalent diameter of each carbide (nm)] = $(4 \times$ [area of each carbide $(nm^2)] / \pi)^{1/2}$

In the calculation of area fraction and average circle equivalent diameter of carbides, carbides having a circle equivalent diameter of less than 5 nm are excluded.

Further, prior $\gamma$ grain boundaries, packet boundaries, and block boundaries are inherent in martensite regions, and carbides may precipitate film-like on these grain and other boundaries, but such carbides are not included in carbides present in martensite grains.

Mechanical properties of the steel sheet according to an embodiment of the present disclosure are described below.

Tensile strength (TS): 1310 MPa or more

The steel sheet according to an embodiment of the present has excellent delayed fracture resistance even at a TS of 1310 MPa or more. Accordingly, TS is 1310 MPa or more. TS is preferably 1470 MPa or more. TS is more preferably 1700 MPa or more. An upper limit of TS is not particularly limited. For example, TS of 2500 MPa or less may be suitable. TS is measured by a tensile test in accordance with Japanese Industrial Standard JIS Z 2241. Details are described in the EXAMPLES section below.

Further, the steel sheet according to an embodiment of the present disclosure may have a coated or plated layer on a surface (one or both sides). The type of coated or plated layer is not particularly limited and may be, for example, a galvanized layer or a coating or plating layer of a metal other than zinc. Further, the coated or plated layer may contain components other than a main component such as zinc. Examples of galvanized layers include hot-dip galvanized layers, galvannealed layers, and electrogalvanized layers.

The thickness of the steel sheet according to an embodiment of the present disclosure is not particularly limited. The thickness of the steel sheet is preferably 0.5 mm or more. The thickness of the steel sheet is preferably 3.0 mm or less. Further, the steel sheet according to an embodiment of the present disclosure may be a hot-rolled steel sheet or a cold-rolled steel sheet.

[2] Member

A member according to an embodiment of the present disclosure is described below.

The member according to an embodiment of the present disclosure is a member made using the steel sheet described above as a material. For example, the steel sheet as a material is subjected to at least one of forming or joining, or, suitably, cold pressing, to make the member.

Here, the steel sheet simultaneously achieves a strength of TS: 1310 MPa or more and excellent delayed fracture resistance. Further, due to the above properties, the steel sheet is applicable to various components by cold pressing, thereby contributing to increased component strength and weight reduction more advantageously in terms of cost and productivity. Therefore, the member according to an embodiment of the present disclosure is particularly suitable for application as a member for use in automobiles, home appliances, and the like.

[3] Method of producing steel sheet

The following describes a method of producing a steel sheet according to an embodiment of the present disclosure.

The method of producing a steel sheet according to an embodiment of the present disclosure includes:

a rolling process of rolling a steel slab having the above chemical composition to obtain a steel sheet;
an annealing process of annealing the steel sheet at an annealing temperature of $A_3$ or more for an annealing time of 30 s or more;
a first cooling process of cooling the steel sheet at an average cooling rate of 10 °C/s or less in a temperature range from the annealing temperature to a second cooling start temperature;
a second cooling process of cooling the steel sheet at an average cooling rate of 30 °C/s or more in a temperature range from the second cooling start temperature of 680 °C or more to 50 °C, to a cooling stop temperature of 50 °C or less; and
a tempering process of tempering the steel sheet under a set of conditions satisfying Expressions (2), (3), and (4).

Unless otherwise specified, each temperature above refers to a surface temperature of the steel slab or the steel sheet.

[Rolling process]

First, a steel slab is rolled, for example by hot rolling or hot rolling and cold rolling, to make a steel sheet. Methods of preparing a steel slab (production conditions), hot rolling conditions and cold rolling conditions are not particularly limited and may be carried out in accordance with conventional methods. Pickling may be optionally applied to a hot-rolled steel sheet after hot rolling. Pickling conditions are also not particularly limited, and a conventional method may be followed. Further, pickling may be optionally applied to a cold-rolled steel sheet after cold rolling. Pickling conditions are also not particularly limited, and a conventional method may be followed.

[Annealing process]

The steel sheet (hot-rolled steel sheet or cold-rolled steel sheet) obtained as described above is then annealed at an annealing temperature of $A_3$ temperature or more for an annealing time of 30 s or more.

Annealing temperature: $A_3$ temperature or more

In order to obtain the martensite and bainite dominated microstructure described above in the microstructure of the final product steel sheet, the annealing temperature needs to be the $A_3$ temperature or more.

That is, when the annealing temperature is less than the $A_3$ temperature, sufficient austenite is not formed during annealing. As a result, the defined total area fraction of martensite and bainite cannot be obtained in the final product, and therefore a TS of 1310 MPa or more cannot be obtained. The annealing temperature is therefore the $A_3$ temperature or more. An upper limit of the annealing temperature is not particularly limited, but when the annealing temperature exceeds a certain level, austenite grain size may become coarse and toughness may degrade. The annealing temperature is therefore preferably 1000 °C or less.

The annealing temperature is the maximum arrival temperature in the annealing process, and the temperature during holding during annealing may be constant or variable as long as the temperature is the $A_3$ temperature or more. Further, the $A_3$ temperature is determined by the following expression.

$A_3$ temperature (°C) = 910 - 203 × [C%]$^{0.5}$ + 44.7 × [Si%] + 31.5 × --> [Mo%] - 30 × [Mn%] - 11 × [Cr%] + 700 × [P%] + 400 × [Al%] + 400 × [Ti%]

Annealing time: 30 s or more

When the annealing time is less than 30 s, sufficient austenite is not formed during annealing. As a result, the defined total area fraction of martensite and bainite cannot be obtained in the final product, and therefore a TS of 1310 MPa or more cannot be obtained. The annealing time is therefore 30 s or more. An upper limit of the annealing time is not particularly limited, but when the annealing time exceeds a certain level, austenite grain size may become coarse and toughness may degrade. The annealing time is therefore preferably 900 s or less.

The annealing time is the holding time (residence time) in the temperature range from the $A_3$ temperature and up.

[First cooling process]

The steel sheet annealed as described above is cooled at an average cooling rate of 10 °C/s or less in a temperature range from the annealing temperature to a second cooling start temperature (described below).

Average cooling rate in temperature range from annealing temperature to second cooling start temperature: 10 °C/s or less

When the average cooling rate in the temperature range from the annealing temperature to the second cooling start temperature (hereinafter also referred to as first cooling rate) exceeds 10 °C/s, temperature variations in the steel sheet before the start of the second cooling process may occur, and there is a risk that sheet shape after the second cooling process may not be flat. When the sheet shape is not flat, securing dimensional accuracy when forming into automotive parts becomes difficult, for example. The first cooling rate is therefore 10 °C/s or less. The first cooling rate is preferably 8 °C/s or less. A lower limit of the first cooling rate is not particularly limited. The first cooling rate is preferably 1 °C/s or more.

[Second cooling process]

The steel sheet is then cooled at an average cooling rate of 30 °C/s or more in a temperature range from the second cooling start temperature of 680 °C or more to 50 °C, to a cooling stop temperature of 50 °C or less.

Second cooling start temperature: 680 °C or more

When the second cooling start temperature is less than 680 °C, there is a risk of excessive formation of retained $\gamma$ and pearlite and the defined total area fraction of martensite and bainite not being obtained in the final product. Further, tempering of martensite and bainite may occur during cooling, resulting in excessive coarsening of carbides. The second cooling start temperature is therefore 680 °C or more. An upper limit of the second cooling start temperature is not particularly limited. For example, the second cooling start temperature is preferably 850 °C or less. Further, the second cooling start temperature is preferably the annealing temperature - 50 °C, or less.

Average cooling rate in temperature range from second cooling start temperature to 50 °C: 30 °C/s or more

When the average cooling rate in the temperature range from the second cooling start temperature to 50 °C (hereinafter also referred to as the second cooling rate) is less than 30 °C/s, there is a risk of excessive formation of retained $\gamma$ and pearlite and the defined total area fraction of martensite and bainite not being obtained in the final product. Further, tempering of martensite and bainite may occur during cooling, resulting in excessive coarsening of carbides. The second cooling rate is therefore 30 °C/s or more. The second cooling rate is preferably 50 °C/s or more. The second cooling rate is more preferably 100 °C/s or more. An upper limit of the second cooling rate is not particularly limited. The second cooling rate is preferably 2000 °C/s or less.

Cooling stop temperature: 50 °C or less

From the viewpoint of inhibiting coarsening of carbides, the cooling stop temperature is 50 °C or less. A lower limit of the cooling stop temperature is not particularly limited. The cooling stop temperature is preferably 5 °C or more.

[Tempering process]

The steel sheet is then tempered under conditions that simultaneously satisfy the following Expressions (2), (3), and (4).

$$\lambda 1 \leq 5000 \qquad \qquad \ldots (2)$$

When $\lambda 1$ is excessive, the area fraction of carbides becomes excessive, making obtaining the defined strength difficult. $\lambda 1$ is therefore 5000 or less. $\lambda 1$ is more preferably 4700 or less. A lower limit of $\lambda 1$ is not particularly limited. For example, $\lambda 1$ is preferably 3500 or more.

$$\lambda 2 \geq 3100 \qquad \qquad \ldots (3)$$

When $\lambda 2$ is too small, obtaining fine carbides that contribute to hydrogen trapping becomes difficult, and obtaining a carbide particle size distribution that satisfies Expression (1) becomes difficult. $\lambda 2$ is therefore 3100 or more.

$$\lambda 2 \leq 0.88 \times \lambda 1 + 400 \qquad \qquad \ldots (4)$$

Further, by controlling $\lambda 2$ to satisfy Expression (4) in relation to $\lambda 1$, fine carbides that contribute to hydrogen trapping are obtained, and therefore a carbide particle size distribution that satisfies Expression (1) becomes obtainable. $\lambda 2$ is therefore controlled to satisfy Expression (4) in relation to $\lambda 1$.
In Expressions (2) to (4):

$\lambda 1$ is a tempering parameter of a first section of the tempering process,
$\lambda 2$ is a tempering parameter of a second section of the tempering process,
defined by the following Expressions (5) and (6),

$$\lambda 1 = T1 \times (\log t1 + 20) \qquad \qquad \ldots (5)$$

$$\lambda 2 = T2 \times (\log t2 + 20) \qquad \qquad \ldots (6)$$

and
$t1$ is time in s of the first section of the tempering process,
$T1$ is intermediate temperature in °C of the first section of the tempering process,
$t2$ is time in s of the second section of the tempering process, and
$T2$ is intermediate temperature in °C of the second section of the tempering process.
The log in Expressions (5) and (6) represents the common logarithm (base = 10).

The first section and the second section of the tempering process are defined as time periods in the tempering process in a temperature range of 100 °C or more divided into two equal sections, the first half (of the tempering process in a temperature range of 100 °C or more) being the first section and the second half (of the tempering process in a temperature range of 100 °C or more) being the second section.
Further, temperatures at the midpoints of the first section and the second section are measured, and the measured values are T1 and T2, respectively.
t1 and t2 are not particularly limited. For example, t1 and t2 are each preferably 200 s to 700 s. Further, T1 and T2 are also not particularly limited. For example, T1 is preferably 150 °C to 220 °C. T2 is preferably 150 °C to 200 °C.
From the viewpoint of stabilizing shape accuracy of press forming, such as adjustment of roughness on the sheet surface and flattening of the sheet shape, the steel sheet may optionally be subjected to skin pass rolling (temper rolling) or leveling. The conditions of skin pass rolling and leveling process are not particularly limited and may follow a conventional method.

[Coating or plating treatment process]

Further, the resulting steel sheet may be subjected to coating or plating treatment. Through the coating or plating treatment, the steel sheet may be provided with a coated or plated layer on a surface. Coating or plating treatment methods are not particularly limited and include, for example, hot dip coating and electroplating. Further, the coating or plating treatment may include an alloying process after hot dip coating. Further, the type of coating or plating is not particularly limited and includes, for example, zinc coating or plating or coating or plating of a metal other than zinc. The conditions of the coating or plating treatment are not particularly limited and may follow a conventional method. A coating or plating bath may contain components other than a main component such as zinc. Further, when both coating or plating treatment and skin pass rolling are performed, the skin pass rolling is preferably performed after the coating or plating treatment.

Each of the above processes after the annealing process may optionally be performed by continuous annealing or batch annealing. From the viewpoint of productivity, continuous annealing is preferred.

Conditions other than those described above are not particularly limited, and a conventional method may be used.

[4] Method of producing member

The following describes a method of producing a member according to an embodiment of the present disclosure.

The method of producing a member according to an embodiment of the present disclosure includes applying at least one of forming or joining, or, suitably, cold pressing, to the steel sheet (for example, a steel sheet produced by the method of producing a steel sheet) to produce the member.

Here, a forming method is not particularly limited, and a typical processing method such as press working may be used, for example. Further, a joining method is also not particularly limited, and for example, typical welding such as spot welding, laser welding, arc welding, and the like, rivet joining, swaging joining, and the like may be used. Forming and joining conditions are not particularly limited and may follow a conventional method. Cold pressing conditions are also not particularly limited, and may follow a conventional method.

EXAMPLES

Steel having the chemical compositions listed in Table 1 (the balance being Fe and inevitable impurity) was melted and cast into steel slabs. The obtained steel slabs were hot rolled to obtain hot-rolled steel sheets under a set of conditions including: rolling finish temperature: 840 °C to 950 °C and coiling temperature: 400 °C to 700 °C. The obtained hot-rolled steel sheets were then subjected to pickling and subsequent cold rolling to obtain cold-rolled steel sheets. The obtained cold-rolled steel sheets were subjected to heat treatment by continuous annealing (annealing process, first cooling process, second cooling process, and tempering process) under sets of conditions listed in Table 2. The cooling stop temperature in the second cooling process was room temperature (25 °C) in each case. Coating or plating treatment (electrogalvanization treatment) was then applied to at least one cold-rolled steel sheet (No. 17 cold-rolled steel sheet) to provide a coated or plated layer on at least one surface. The thickness of the steel sheet that would become the final product was 1.4 mm in each case. Further, the annealing time of No. 27 was the holding time at the annealing temperature of No. 27. Conditions other than those specified were in accordance with a conventional method.

Using the resulting steel sheets, microstructure of the steel sheets was identified, and the area fraction and average circle equivalent diameter of carbides in grains of martensite and bainite were measured as described above. Further, the left-hand side value of Expression (1) was determined using the procedure described above. Results are listed in Table 3.

Further, tensile tests and delayed fracture tests were conducted according to the following procedures.

Tensile testing was performed in accordance with JIS Z 2241. That is, a JIS No. 5 test piece was taken from each steel sheet such that the longitudinal direction was perpendicular to the rolling direction of the steel sheet. The collected test piece was subjected to tensile testing at a crosshead velocity of 10 mm/min to measure TS. The results are listed in Table 3. The evaluation criteria were as follows.

• TS

    Pass: 1310 MPa or more
    Fail: less than 1310 MPa

Delayed fracture testing was performed by low strain rate tensile testing, using the following procedure. Test pieces were prepared by grinding both sides of each steel sheet to a thickness of 1.2 mm, buffing surfaces, and processing into a shape with a parallel portion length of 15 mm and a parallel portion width of 6 mm. For each test piece, a preliminary hydrogen charge was then applied. (When the thickness of the steel sheet was less than 1.2 mm, the test piece was prepared by grinding 0.1 mm or more on at least one side and buffing surfaces.) The preliminary hydrogen charge was performed under a set of conditions including a 3 mass% NaCl aqueous solution with 3 g/L of ammonium thiocyanate added to a treatment solution at a liquid temperature of 20 °C to 30 °C, at a current density of 0.05 mA/cm$^2$, for a holding time of 48 h. After completion of the preliminary charge, the treatment solution was replaced and hydrogen charging was performed under the same set of conditions as the preliminary charge, then a tensile test was conducted using the test piece with a strain rate of 0.005 mm/min to determine the maximum stress value ($\sigma$H). Further, a test piece was prepared from each steel sheet in the same way as above, and a tensile test was conducted in an air environment under the same set of conditions as above except without the preliminary hydrogen charging and hydrogen charging, and the maximum stress value ($\sigma$N) was determined. The stress ratio $\sigma$H/$\sigma$N was then determined, and the stress ratio $\sigma$H/$\sigma$N was used as an index of delayed fracture resistance. A stress ratio $\sigma$H/$\sigma$N satisfying the following Expression (7) was judged as having excellent delayed fracture resistance ("Pass" in the column for delayed fracture resistance in Table 3), and a stress ratio not satisfying the Expression were judged as having insufficient delayed fracture resistance ("Fail" in the column for delayed fracture resistance in Table 3). The results are listed in Table 3.

$$\sigma H/\sigma N \geq 1.15 - 0.0002 \times TS \qquad \ldots (7)$$

Here, TS is the tensile strength of the steel sheet.

Further, from the viewpoint of securing dimensional accuracy when forming into automotive parts, the sheet shape is required to be good. For this purpose, each steel sheet was cut into a 1000 mm wide and 500 mm long piece, then placed horizontally on a surface plate, and the height at the highest point on the surface plate (distance from the surface of the surface plate) was measured. The maximum warpage height was defined as the value obtained by subtracting the steel sheet thickness from the measured value, and was used as an index of sheet shape. A steel sheet having a maximum warpage height of 20 mm or less was judged to have good shape ("Pass" in the "Shape" column of Table 3), and a steel sheet having a maximum warpage height exceeding 20 mm was judged to have poor shape ("Fail" in the "Shape" column of Table 3). The results are listed in Table 3.

[Table 1]

Table 1

| Steel ID | Chemical composition (mass%) | | | | | | | | A$_3$ temp. (°C) | Remarks |
|---|---|---|---|---|---|---|---|---|---|---|
| | C | Si | Mn | P | S | sol.Al | N | Other | | |
| A | 0.13 | 1.26 | 0.87 | 0.008 | 0.0011 | 003 | 0.003 | | 884 | Conforming steel |
| B | 0.38 | 1.14 | 1.95 | 0.003 | 0.0004 | 003 | 0.004 | | 791 | Conforming steel |
| C | 0.18 | 1.50 | 1.87 | 0.014 | 0.0015 | 0.04 | 0.003 | | 861 | Conforming steel |
| D | 0.31 | 0.02 | 0.40 | 0.015 | 0.0011 | 003 | 0.004 | | 808 | Conforming steel |
| E | 0.30 | 0.59 | 3.40 | 0.016 | 0.0003 | 0.02 | 0.004 | | 742 | Conforming steel |
| F | 0.15 | 0.44 | 2.11 | 0.046 | 0.0003 | 0.02 | 0.005 | | 828 | Conforming steel |
| G | 0.18 | 1.01 | 1.35 | 0.003 | 0.0038 | 0.02 | 0.003 | | 839 | Conforming steel |
| H | 0.20 | 0.75 | 0.70 | 0.008 | 0.0024 | 0.56 | 0.004 | | 1061 | Conforming steel |

(continued)

| Steel ID | Chemical composition (mass%) | | | | | | | | A₃ temp. (°C) | Remarks |
|---|---|---|---|---|---|---|---|---|---|---|
| | C | Si | Mn | P | S | sol.Al | N | Other | | |
| I | 0.34 | 0.18 | 1.60 | 0.013 | 0.0018 | 0.02 | 0.007 | | 769 | Conforming steel |
| J | 0.30 | 0.34 | 2.35 | 0.015 | 0.0008 | 0.04 | 0.004 | Cu:0.08, Ni:0.10 | 770 | Conforming steel |
| K | 019 | 1.17 | 1.90 | 0012 | 0.0006 | 0.01 | 0.003 | Mo:0.03, Cr:0.02, Zr:0.008 | 830 | Conforming steel |
| L | 021 | 026 | 1.84 | 0.020 | 0.0008 | 0.02 | 0.003 | Ca:0.0001, Ti:0.014, B:0.0012 | 801 | Conforming steel |
| M | 0.28 | 0.77 | 137 | 0.010 | 0.0016 | 0.03 | 0.003 | Nb:0.012, B:0.0010 | 815 | Conforming steel |
| N | 0.24 | 022 | 1.26 | 0007 | 0.0006 | 0.01 | 0.003 | V:0.007, W:0.004, Sb:0.006 | 791 | Conforming steel |
| O | 0.14 | 0.93 | 1.15 | 0.014 | 0.0015 | 0.02 | 0.003 | Sn:0.005, Mg:0.0005, As:0.002 | 859 | Conforming steel |
| P | 0.37 | 0.10 | 2.31 | 0.008 | 0.0004 | 0.02 | 0.004 | Cu:0.14, Ti:0.030, B:0.0028 | 747 | Conforming steel |
| Q | 0.32 | 1.26 | 207 | 0.016 | 0.0006 | 0.02 | 0.003 | Ni:0.08, Mo:0.05, V:0.010, Co:0.015 | 810 | Conforming steel |
| R | 0.11 | 1.14 | 2.45 | 0.017 | 0.0018 | 0.04 | 0.004 | | 848 | Comparative steel |
| S | 0.43 | 0.60 | 0.83 | 0.017 | 00019 | 003 | 0.003 | | 803 | Comparative steel |
| T | 026 | 1.60 | 1.78 | 0019 | 0.0016 | 003 | 0.004 | | 850 | Comparative steel |
| U | 0.16 | 0.56 | 0.10 | 0.006 | 0.0011 | 003 | 0.004 | | 867 | Comparative steel |
| V | 021 | 1.13 | 3.60 | 0022 | 0.0014 | 0.02 | 0.004 | | 783 | Comparative steel |
| W | 0.17 | 0.34 | 1.83 | 0.055 | 0.0013 | 0.04 | 0.004 | | 841 | Comparative steel |
| X | 0.34 | 0.89 | 2.89 | 0.020 | 0.0113 | 003 | 0.004 | | 771 | Comparative steel |
| Y | 0.25 | 1.10 | 1.06 | 0.018 | 00012 | 1.05 | 0.005 | | 1258 | Comparative steel |
| Z | 0.24 | 1.07 | 2.90 | 0.003 | 0.0014 | 003 | 0.011 | | 785 | Comparative steel |
| AA | 0.13 | 0.70 | 0.55 | 0.010 | 0.0075 | 0.01 | 0.003 | | 863 | Conforming steel |

(continued)

| Steel ID | Chemical composition (mass%) | | | | | | | | A₃ temp. (°C) | Remarks |
|---|---|---|---|---|---|---|---|---|---|---|
| | C | Si | Mn | P | S | sol.Al | N | Other | | |
| AB | 0.15 | 0.60 | 0.75 | 0.010 | 0.0045 | 0.01 | 0.003 | | 847 | Conforming steel |
| AC | 0.39 | 0.02 | 3.46 | 0.002 | 0.0003 | 0.80 | 0.003 | | 1002 | Conforming steel |
| AD | 0.35 | 0.25 | 2.45 | 0.005 | 0.0003 | 0.61 | 0.003 | | 975 | Conforming steel |
| * Underlined values do not satisfy a range or condition specified in the present disclosure. | | | | | | | | | | |

[Table 2]

Table 2

| No. | Steel ID | Annealing | | First cooling | Second cooling | | Tempering | | | Coating or plating treatment | Remarks |
|---|---|---|---|---|---|---|---|---|---|---|---|
| | | Annealing temp. (°C) | Annealing time (s) | First cooling rate (°C/s) | Second cooling start temp. (°C) | Second cooling rate (°C/s) | λ1 | λ2 | 0.88 × λ1 + 400 | | |
| 1 | A | 918 | 490 | 7 | 812 | 666 | 4302 | 3851 | 4186 | No | Example |
| 2 | B | 871 | 450 | 4 | 726 | 130 | 4187 | 4042 | 4085 | No | Example |
| 3 | C | 873 | 330 | 6 | 732 | 117 | 4876 | 4330 | 4691 | No | Example |
| 4 | D | 902 | 370 | 6 | 812 | 722 | 3573 | 3392 | 3545 | No | Example |
| 5 | E | 788 | 160 | 8 | 681 | 41 | 4225 | 3518 | 4118 | No | Example |
| 6 | F | 868 | 250 | 6 | 722 | 76 | 4844 | 3872 | 4663 | No | Example |
| 7 | G | 865 | 590 | 5 | 799 | 682 | 4426 | 3680 | 4294 | No | Example |
| 8 | H | 1066 | 420 | 5 | 821 | 751 | 4546 | 4240 | 4401 | No | Example |
| 9 | I | 792 | 390 | 8 | 738 | 662 | 4590 | 3666 | 4439 | No | Example |
| 10 | J | 801 | 150 | 7 | 724 | 86 | 3812 | 3494 | 3754 | No | Example |
| 11 | K | 845 | 450 | 8 | 735 | 102 | 4509 | 4212 | 4368 | No | Example |
| 12 | L | 840 | 550 | 5 | 710 | 116 | 3837 | 3568 | 3777 | No | Example |
| 13 | M | 827 | 400 | 6 | 749 | 626 | 3630 | 3485 | 3595 | No | Example |
| 14 | N | 892 | 570 | 7 | 780 | 689 | 4186 | 3658 | 4084 | No | Example |
| 15 | O | 899 | 240 | 6 | 782 | 712 | 4044 | 3921 | 3959 | No | Example |
| 16 | P | 779 | 200 | 5 | 718 | 88 | 4879 | 4170 | 4694 | No | Example |
| 17 | Q | 833 | 190 | 7 | 742 | 91 | 4058 | 3510 | 3971 | Yes | Example |
| 18 | R | 878 | 550 | 4 | 716 | 99 | 4664 | 3621 | 4505 | No | Comparative Example |
| 19 | S | 889 | 530 | 6 | 753 | 733 | 4532 | 4328 | 4388 | No | Comparative Example |

EP 4 477 773 A1

(continued)

| No. | Steel ID | Annealing | | First cooling | Second cooling | | Tempering | | | Coating or plating treatment | Remarks |
|---|---|---|---|---|---|---|---|---|---|---|---|
| | | Annealing temp. (°C) | Annealing time (s) | First cooling rate (°C/s) | Second cooling start temp. (°C) | Second cooling rate (°C/s) | λ1 | λ2 | 0.88 × λ1 + 400 | | |
| 20 | I | 874 | 430 | 7 | 753 | 548 | 3880 | 3736 | 3814 | No | Comparative Example |
| 21 | U | 887 | 110 | 5 | 771 | 83 | 4124 | 3906 | 4029 | No | Comparative Example |
| 22 | V | 823 | 420 | 5 | 743 | 82 | 4248 | 3575 | 4138 | No | Comparative Example |
| 23 | W | 868 | 270 | 8 | 842 | 78 | 4478 | 3927 | 4340 | No | Comparative Example |
| 24 | X | 799 | 520 | 4 | 715 | 52 | 3786 | 3199 | 3732 | No | Comparative Example |
| 25 | Y | 1263 | 460 | 6 | 822 | 882 | 4635 | 3597 | 4479 | No | Comparative Example |
| 26 | Z | 844 | 160 | 5 | 736 | 648 | 3702 | 3364 | 3658 | No | Comparative Example |
| 27 | A | 800 | 590 | 6 | 723 | 754 | 4026 | 3701 | 3943 | No | Comparative Example |
| 28 | A | 919 | 10 | 8 | 702 | 715 | 3775 | 3643 | 3722 | No | Comparative Example |
| 29 | D | 841 | 480 | 4 | 650 | 699 | 3825 | 3423 | 3766 | No | Comparative Example |
| 30 | D | 912 | 560 | 14 | 668 | 721 | 4226 | 3864 | 4119 | No | Comparative Example |
| 31 | H | 1067 | 390 | 5 | 742 | 15 | 3635 | 3225 | 3599 | No | Comparative Example |
| 32 | H | 1065 | 430 | 7 | 810 | 789 | 5479 | 5205 | 5222 | No | Comparative Example |
| 33 | O | 899 | 390 | 5 | 798 | 876 | 3680 | 3048 | 3638 | No | Comparative Example |
| 34 | P | 765 | 910 | 4 | 728 | 92 | 3561 | 3561 | 3534 | No | Comparative Example |
| 35 | AA | 875 | 570 | 6 | 750 | 812 | 3630 | 3485 | 3595 | No | Example |
| 36 | AB | 875 | 570 | 5 | 748 | 799 | 3630 | 3485 | 3595 | No | Example |
| 37 | AC | 1020 | 580 | 5 | 910 | 120 | 3915 | 3510 | 3845 | No | Example |
| 38 | AD | 1010 | 580 | 5 | 900 | 110 | 3802 | 3578 | 3745 | No | Example |

* Underlined values do not satisfy a range or condition specified in the present disclosure.

[Table 3]

19

Table 3

| No. | Steel ID | Area fraction of each phase | | Carbides in grains of martensite and bainite | | | Tensile strength (MPa) | Delayed fracture resistance | | | Sheet shape | Remarks |
| | | Total martensite and bainite (%) | Residual microstructure (%) | Area fraction (%) | Average circle equivalent diameter (nm) | Left-hand side value of Expression (1) | | Right-hand side value of Expression (7) | σH/σN | Evaluation | | |
| --- | --- | --- | --- | --- | --- | --- | --- | --- | --- | --- | --- | --- |
| 1 | A | 100 | 0 | 10 | 19 | 1.59 | 1313 | 0.89 | 0.99 | Pass | Pass | Example |
| 2 | B | 100 | 0 | 14 | 25 | 1.37 | 2116 | 0.73 | 0.75 | Pass | Pass | Example |
| 3 | C | 100 | 0 | 16 | 29 | 1.77 | 1507 | 0.85 | 0.94 | Pass | Pass | Example |
| 4 | D | 95 | 5 | 10 | 15 | 1.31 | 1755 | 0.80 | 0.87 | Pass | Pass | Example |
| 5 | E | 100 | 0 | 15 | 12 | 1.76 | 1945 | 0.76 | 0.86 | Pass | Pass | Example |
| 6 | F | 98 | 2 | 17 | 27 | 2.12 | 1325 | 0.89 | 0.94 | Pass | Pass | Example |
| 7 | G | 100 | 0 | 13 | 18 | 1.83 | 1472 | 0.86 | 0.91 | Pass | Pass | Example |
| 8 | H | 100 | 0 | 15 | 27 | 1.55 | 1353 | 0.88 | 0.93 | Pass | Pass | Example |
| 9 | I | 99 | 1 | 19 | 20 | 202 | 1920 | 0.77 | 0.84 | Pass | Pass | Example |
| 10 | J | 100 | 0 | 11 | 14 | 1.42 | 1887 | 0.77 | 0.86 | Pass | Pass | Example |
| 11 | K | 100 | 0 | 13 | 26 | 1.53 | 1547 | 0.84 | 0.99 | Pass | Pass | Example |
| 12 | L | 100 | 0 | 10 | 15 | 1.39 | 1588 | 0.83 | 0.92 | Pass | Pass | Example |
| 13 | M | 100 | 0 | 8 | 18 | 2.14 | 1828 | 0.78 | 0.84 | Pass | Pass | Example |
| 14 | N | 100 | 0 | 13 | 24 | 1.70 | 1565 | 0.84 | 1.02 | Pass | Pass | Example |
| 15 | O | 100 | 0 | 9 | 21 | 1.32 | 1336 | 0.88 | 0.98 | Pass | Pass | Example |
| 16 | P | 100 | 0 | 22 | 32 | 1.94 | 2048 | 0.74 | 0.86 | Pass | Pass | Example |
| 17 | Q | 100 | 0 | 11 | 15 | 1.63 | 1986 | 0.75 | 0.81 | Pass | Pass | Example |
| 18 | R | 100 | 0 | 13 | 16 | 2.08 | 1290 | 0.89 | 0.97 | Pass | Pass | Comparative Example |
| 19 | S | 100 | 0 | 19 | 36 | 1.46 | 2140 | 0.72 | 0.65 | Fail | Pass | Comparative Example |

(continued)

| No. | Steel ID | Area fraction of each phase | | Carbides in grains of martensite and bainite | | | Tensile strength (MPa) | Delayed fracture resistance | | | Sheet shape | Remarks |
|---|---|---|---|---|---|---|---|---|---|---|---|---|
| | | Total martensite and bainite (%) | Residual microstructure (%) | Area fraction (%) | Average circle equivalent diameter (nm) | Left-hand side value of Expression (1) | | Right-hand side value of Expression (7) | σH/σN | Evaluation | | |
| 20 | T | 100 | 0 | 8 | 14 | 127 | 1813 | 0.79 | 0.71 | Fail | Pass | Comparative Example |
| 21 | U | 49 | 51 | 11 | 21 | 1.40 | 1078 | 0.93 | 0.98 | Pass | Pass | Comparative Example |
| 22 | V | 100 | 0 | 12 | 11 | 1.71 | 1710 | 0.81 | 0.70 | Fail | Pass | Comparative Example |
| 23 | W | 100 | 0 | 14 | 27 | 1.76 | 1386 | 0.87 | 0.76 | Fail | Pass | Comparative Example |
| 24 | X | 100 | 0 | 11 | 6 | 1.58 | 2079 | 0.73 | 0.48 | Fail | Pass | Comparative Example |
| 25 | V | 100 | 0 | 16 | 12 | 2.04 | 1407 | 0.87 | 0.82 | Fail | Pass | Comparative Example |
| 26 | Z | 100 | 0 | 8 | 8 | 1.38 | 1772 | 0.80 | 0.78 | Fail | Pass | Comparative Example |
| 27 | A | 48 | 52 | 8 | 15 | 1.44 | 1101 | 0.93 | 0.98 | Pass | Pass | Comparative Example |
| 28 | A | 91 | 9 | 6 | 12 | 1.24 | 1357 | 0.88 | 0.79 | Fail | Pass | Comparative Example |
| 29 | D | 83 | 17 | 12 | 13 | 1.49 | 1622 | 0.83 | 0.72 | Fail | Pass | Comparative Example |
| 30 | D | 85 | 15 | 16 | 25 | 1.57 | 1668 | 0.82 | 0.79 | Fail | Fail | Comparative Example |
| 31 | H | 36 | 64 | 7 | 5 | 1.56 | 916 | 0.97 | 1.00 | Pass | Pass | Comparative Example |

| No. | Steel ID | Area fraction of each phase | | Carbides in grains of martensite and bainite | | | Tensile strength (MPa) | Delayed fracture resistance | | | Sheet shape | Remarks |
|---|---|---|---|---|---|---|---|---|---|---|---|---|
| | | Total martensite and bainite (%) | Residual microstructure (%) | Area fraction (%) | Average circle equivalent diameter (nm) | Left-hand side value of Expression (1) | | Right-hand side value of Expression (7) | σH/σN | Evaluation | | |
| 32 | H | 100 | 0 | <u>26</u> | <u>81</u> | 1.95 | <u>1281</u> | 0.89 | 0.99 | Pass | Pass | Comparative Example |
| 33 | O | 100 | 0 | 4 | 2 | 1.58 | 1358 | 0.88 | 0.85 | Fail | Pass | Comparative Example |
| 34 | P | 100 | 0 | 11 | 18 | <u>1.18</u> | 2107 | 0.73 | 0.70 | Fail | Pass | Comparative Example |
| 35 | AA | 95 | 5 | 5 | 11 | 207 | 1310 | 0.89 | 0.90 | Pass | Pass | Example |
| 36 | AB | 95 | 5 | 6 | 12 | 2.08 | 1366 | 0.88 | 0.92 | Pass | Pass | Example |
| 37 | AC | 100 | 0 | 15 | 17 | 1.53 | 2001 | 0.75 | 0.81 | Pass | Pass | Example |
| 38 | AD | 100 | 0 | 13 | 16 | 1.36 | 1898 | 0.77 | 0.83 | Pass | Pass | Example |

\* Underlined values do not satisfy a range or condition specified in the present disclosure.

As demonstrated in Table 3, both tensile strength (TS) and delayed fracture resistance were acceptable for all of the Examples. Further, sheet shape was good. Further, the steel sheets of the Examples were used in various shapes of members obtained by various forming processes, including cold pressing, and in various shapes of members obtained by joining processes. In each case, the member did not exhibit delayed fracture and had sufficient tensile strength (TS).

In contrast, at least one of tensile strength (TS) and delayed fracture resistance was insufficient for each of the Comparative Examples.

INDUSTRIAL APPLICABILITY

According to the present disclosure, a steel sheet that simultaneously achieves a strength of TS: 1310 MPa or more and excellent delayed fracture resistance is obtainable. Further, due to the above properties, the steel sheet is applicable by cold pressing to various components for which high strength is required, thereby contributing to increased component strength and weight reduction more advantageously in terms of cost and productivity.

**Claims**

1.  A steel sheet comprising a chemical composition containing, in mass%,

    C: 0.12 % or more and 0.40 % or less,
    Si: 1.50 % or less,
    Mn: 0.20 % or more and 3.50 % or less,
    P: 0.050 % or less,
    S: 0.0100 % or less,
    sol.Al: 1.00 % or less, and
    N: 0.010 % or less,
    with the balance being Fe and inevitable impurity, wherein
    total area fraction of martensite and bainite is 95 % or more and 100 % or less,
    area fraction of carbides in grains of the martensite and the bainite is 5 % or more and 25 % or less,
    average circle equivalent diameter of the carbides is 10 nm or more and 80 nm or less,
    Expression (1), below, is satisfied for particle size distribution of the carbides, and
    the steel sheet has a tensile strength of 1310 MPa or more,
    [Math. 1]

$$\frac{n}{(n-1)(n-2)}\sum_{i=1}^{n}\left(\frac{x_i - X}{s}\right)^3 \geqq 1.20 \qquad \ldots(1)$$

    where

    $x_i$ is number density per $\mu m^2$ of carbides having circle equivalent diameter of $(5.0 \times i)$ nm or more and less than $(5.0 \times (i + 1))$ nm,
    i is an integer from 1 to n,
    n is 31,
    X is an average value of $x_i$, and
    s is standard deviation of $x_i$.

2.  The steel sheet according to claim 1, wherein the chemical composition further contains at least one element selected from Group A, Group B, or Group A and Group B, in mass%,

    Group A consists of

    Cu: 1.00 % or less,
    Ni: 1.00 % or less,
    Mo: 0.50 % or less,
    Cr: 1.00 % or less,

Zr: 0.100 % or less,
Ca: 0.0100 % or less,
Ti: 0.100 % or less,
Nb: 0.100 % or less,
B: 0.0100 % or less,
V: 0.200 % or less,
W: 0.200 % or less,
Sb: 0.100 % or less,
Sn: 0.100 % or less, and
Mg: 0.0100 % or less, and

Group B consists of Se, As, Pb, Bi, Zn, Cs, Rb, Co, La, Tl, Nd, Y, In, Be, Hf, Tc, Ta, O, La, Ce, and Pr, totaling 0.02 % or less.

3. The steel sheet according to claim 1, further comprising a coated or plated layer on a surface.

4. The steel sheet according to claim 2, further comprising a coated or plated layer on a surface.

5. A member made using the steel sheet according to any one of claims 1 to 4.

6. A method of producing a steel sheet, the method comprising:

a rolling process of rolling a steel slab having the chemical composition according to claim 1 or 2, to obtain a steel sheet;
an annealing process of annealing the steel sheet at an annealing temperature of $A_3$ or more for an annealing time of 30 s or more;
a first cooling process of cooling the steel sheet at an average cooling rate of 10 °C/s or less in a temperature range from the annealing temperature to a second cooling start temperature;
a second cooling process of cooling the steel sheet at an average cooling rate of 30 °C/s or more in a temperature range from the second cooling start temperature of 680 °C or more to 50 °C, to a cooling stop temperature of 50 °C or less; and
a tempering process of tempering the steel sheet under a set of conditions satisfying Expressions (2), (3), and (4),

$$\lambda1 \leq 5000 \qquad \dots (2)$$

$$\lambda2 \geq 3100 \qquad \dots (3)$$

$$\lambda2 \leq 0.88 \times \lambda1 + 400 \qquad \dots (4)$$

where

$\lambda1$ is a tempering parameter of a first section of the tempering process,
$\lambda2$ is a tempering parameter of a second section of the tempering process,
defined by the following Expressions (5) and (6),

$$\lambda1 = T1 \times (\log t1 + 20) \qquad \dots (5)$$

$$\lambda2 = T2 \times (\log t2 + 20) \qquad \dots (6)$$

and
t1 is time in s of the first section of the tempering process,
T1 is intermediate temperature in °C of the first section of the tempering process,
t2 is time in s of the second section of the tempering process,
T2 is intermediate temperature in °C of the second section of the tempering process, and
the first section and the second section of the tempering process are defined as time periods in the tempering process in a temperature range of 100 °C or more divided into two equal sections, the first half being the first section and the second half being the second section.

7. The method of producing a steel sheet according to claim 6, further comprising a coating or plating treatment process of subjecting the steel sheet to a coating or plating treatment after the tempering process.

8. A method of producing a member, wherein the steel sheet according to any one of claims 1 to 4 is subjected to at least one of a forming process or a joining process to produce the member.

## INTERNATIONAL SEARCH REPORT

| International application No. |
| --- |
| **PCT/JP2022/040833** |

**A.  CLASSIFICATION OF SUBJECT MATTER**

*C22C 38/00*(2006.01)i; *C21D 9/46*(2006.01)i; *C22C 38/06*(2006.01)i; *C22C 38/60*(2006.01)i
FI:    C22C38/00 301S; C22C38/00 301T; C22C38/00 301W; C22C38/06; C22C38/60; C21D9/46 G; C21D9/46 J; C21D9/46 T; C21D9/46 U

According to International Patent Classification (IPC) or to both national classification and IPC

**B.  FIELDS SEARCHED**

Minimum documentation searched (classification system followed by classification symbols)

C22C38/00-38/60; C21D8/00-8/04; C21D9/46-9/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | WO 2021/153392 A1 (JFE STEEL CORP.) 05 August 2021 (2021-08-05)<br>claims, paragraphs [0077]-[0084] | 1-8 |
| A | WO 2020/090303 A1 (JFE STEEL CORP.) 07 May 2020 (2020-05-07)<br>claims, paragraphs [0056]-[0064] | 1-8 |
| A | WO 2018/123356 A1 (KOBE STEEL, LTD.) 05 July 2018 (2018-07-05)<br>claims, paragraphs [0051]-[0068] | 1-8 |
| A | WO 2016/152163 A1 (JFE STEEL CORP.) 29 September 2016 (2016-09-29)<br>claims, paragraphs [0079]-[0083] | 1-8 |
| A | WO 2020/229898 A1 (ARCELORMITTAL) 19 November 2020 (2020-11-19)<br>claims, tables 1-4 | 1-8 |

☐ Further documents are listed in the continuation of Box C.          ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **27 December 2022** | **17 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/040833**

| Patent document cited in search report | | | Publication date (day/month/year) | Patent family member(s) | | | Publication date (day/month/year) |
|---|---|---|---|---|---|---|---|
| WO | 2021/153392 | A1 | 05 August 2021 | EP claims, paragraphs [0082]-[0091] | 4067524 | A1 | |
| | | | | CN | 115003841 | A | |
| WO | 2020/090303 | A1 | 07 May 2020 | EP claims, paragraphs [0049]-[0061] | 3875623 | A1 | |
| | | | | US | 2022/0002827 | A1 | |
| | | | | CN | 112930413 | A | |
| WO | 2018/123356 | A1 | 05 July 2018 | JP | 2018-109222 | A | |
| WO | 2016/152163 | A1 | 29 September 2016 | EP claims, paragraphs [0073]-[0080] | 3276022 | A1 | |
| | | | | US | 2018/0100212 | A1 | |
| | | | | CN | 107429349 | A | |
| WO | 2020/229898 | A1 | 19 November 2020 | WO | 2020/229877 | A1 | |
| | | | | US | 2022/0213573 | A1 | |
| | | | | CN | 113748219 | A | |
| | | | | JP | 2022-532625 | A | |

Form PCT/ISA/210 (patent family annex) (January 2015)

EP 4 477 773 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6635236 B
- JP 5906154 B